# FASCICULE DE BREVET EUROPEEN

(11) **EP 3 318 017 B1**
(45) Date de publication et mention de la délivrance du brevet: **10.04.2019**
(21) Numéro de dépôt: 16750903.3
(22) Date de dépôt: 30.06.2016
(51) Int. Cl.: H04L 12/28, H04L 12/24

(54) **PROCÉDÉ DE DÉCOUVERTE DE LA CONFIGURATION D'UNE INSTALLATION DOMOTIQUE**
VERFAHREN ZUR ENTDECKUNG DER KONFIGURATION EINER HEIMAUTOMATISIERUNGSANLAGE
METHOD FOR DISCOVERING THE CONFIGURATION OF A HOME-AUTOMATION FACILITY

(30) Priorité: 03.07.2015 FR 1556297
(43) Date de publication de la demande: 09.05.2018
(73) Titulaire: SOMFY ACTIVITES SA, 74300 Cluses (FR)
(72) Inventeur: POGNANT, Sylvain, 74600 Seynod (FR); COSSERAT, Hubert, 74100 Annemasse (FR)
(74) Mandataire: Verriest, Philippe
(86) Numéro de dépôt international: PCT/FR2016/051633
(87) Numéro de publication internationale: WO 2017/006020

(56) Documents cités:
- EP-A2- 2 362 368
- US-A1- 2010 067 872
- US-B1- 6 466 234

## Description

La présente invention concerne un procédé de découverte de la configuration d'une installation domotique.

Une installation domotique d'un bâtiment peut comprendre une pluralité de dispositifs domotiques. Il est connu de procéder à la configuration, à la commande et/ou à la supervision de ladite installation en utilisant une unité centrale de commande qui communique avec un ou plusieurs dispositifs domotiques.

Dans le cas de bâtiments de grande taille, il peut être nécessaire soit de recourir à des répéteurs, soit de procéder à l'installation de plusieurs unités centrales afin de permettre d'accéder à l'ensemble des dispositifs domotiques faisant partie de l'installation. Par ailleurs, dans le cas d'installations domotiques hétéroclites, dans lesquels de nombreux types de dispositifs domotiques doivent être contrôlés, il peut également être souhaitable d'utiliser plusieurs unités centrales de commandes qui permettent de communiquer dans les différents protocoles de communication utilisés par les dispositifs domotiques.

Si la présence de ces différentes unités permet de communiquer avec l'ensemble des dispositifs, l'architecture ainsi constituée est complexe à maîtriser pour un utilisateur.

La publication de brevet US6466234 décrit un système de domotique comprenant un procédé de découverte de la configuration d'une installation domotique.

La présente invention a pour but de résoudre tout ou partie des inconvénients mentionnés ci-dessus.

A cet effet, la présente invention concerne un procédé de découverte de la configuration d'une installation domotique, l'installation domotique comprenant une pluralité de dispositifs domotiques et une pluralité d'unités centrales de commande ; le procédé étant exécuté par une unité de gestion ou par un terminal mobile connecté à l'au moins une installation domotique et comprenant les étapes suivantes :
i. Réception d'un premier message en provenance d'une première unité de commande parmi la pluralité d'unités centrales de commande, le premier message comprenant une première information de signalement concernant au moins un premier sous-scénario préenregistré dans ladite première unité centrale de commande en lien avec un identifiant de scenario, le premier sous-scénario comprenant au moins une première commande destinée à au moins un dispositif rattaché à ladite première unité centrale de commande;
ii. Réception d'un deuxième message en provenance d'une deuxième unité de commande parmi la pluralité d'unités centrales de commande, le deuxième message comprenant une deuxième information de signalement concernant au moins un deuxième sous-scénario préenregistré dans ladite deuxième unité centrale de commande en lien avec l'identifiant de scenario, le deuxième sous-scénario comprenant au moins une deuxième commande destinée à au moins un dispositif rattaché à ladite deuxième unité centrale de commande;
iii. Reconstitution d'un scénario associé à l'identifiant de scénario comprenant au moins l'au moins une première commande et l'au moins une deuxième commande, par combinaison du premier sous-scénario et du deuxième sous-scénario ;

Grâce aux dispositions de l'invention, il est possible d'utiliser plusieurs unités centrales de commandes au sein d'une même installation afin d'étendre le nombre de types de dispositifs domotiques ou le nombre de protocoles domotiques utilisables dans une même installation, ou d'augmenter le nombre de dispositifs total de l'installation, tout en conservant une identification de l'appartenance des différents dispositifs domotiques à une même installation.

En particulier, il est possible de réaliser une pré-programmation des scénarios, facilitant l'automatisation du fonctionnement de l'installation et permettant une simplification de l'interface utilisateur, grâce aux sous-scénarios rattachés à un identifiant de scénario global qui cachent le rattachement effectif des dispositifs aux unités centrales de commande.

Chaque unité centrale de commande dispose d'une mémoire lui permettant de mémoriser les dispositifs domotiques qui lui sont rattachés, éventuellement des groupes de dispositifs et des scénarios ou sous-scénario définis et associés à ces dispositifs.

Un terminal utilisateur, connecté sur ce réseau local, peut grâce aux dispositions de l'invention, collecter les informations des unités centrales de commande et reconstituer ces informations pour les présenter à l'utilisateur. Notamment, l'association d'un identifiant unique à chaque scénario permet au terminal utilisateur de reconstituer un scénario global à partir de sous-scénarios répartis sur les différentes unités centrales de commandes, sans que ces unités n'aient besoin de communiquer entre elles ou ne connaissent les autres sous-scénarios.

Ces dispositions permettent d'utiliser un terminal, ou une application sur un terminal ne disposant pas de mémoire de la configuration de l'installation, hormis les paramètres de connexion sur les unités centrales de commande, tout en donnant une vision globale à l'utilisateur des scénario mettant en oeuvre plusieurs unités centrales de commande.

Elles permettent également de retrouver sur un terminal utilisateur une configuration de scénario qui a été définie par un autre terminal utilisateur.

On entend par scénario un ensemble de commandes comprenant au moins une commande destiné à au moins un dispositif domotique, ledit ensemble étant préenregistré lors d'un procédé de configuration dans au moins une unité centrale de commande, le scénario pouvant être déclenché sur la base d'une commande de l'utilisateur, d'un évènement déclenché par la réalisation d'une condition sur le temps et/ou la date, ou encore d'une condition sur une variable d'état d'un dispositif domotique qui peut notamment être une mesure de capteur ou une variable d'état d'un équipement. Un scénario peut être identifié par un identifiant de scénario.

Il est à noter que l'on entend par dispositif domotique un équipement domotique et/ou un capteur, ou encore une partie d'équipement domotique ou une partie de capteur correspondant à un sous-ensemble fonctionnel.

Par ailleurs, on entend par message un élément d'information notifié ou réceptionné sous la forme d'un appel synchrone ou asynchrone, pouvant également correspondre à un appel de fonction local ou distant.

Par installation, on entend un ensemble comprenant une pluralité de dispositifs domotiques et une pluralité d'unité de commande disposés dans un seul bâtiment ou sur une pluralité de lieux, chaque dispositif domotique étant relié à une unité électronique de commande parmi la pluralité d'unités électroniques de commande, la pluralité d'unités électroniques de commande formant un groupe sous le contrôle d'un utilisateur. Les dispositifs électroniques formant des groupes d'au moins un dispositif domotique rattaché à une unité électronique de commande.

Un même dispositif ou une même unité de commande peut appartenir à deux installations différentes sous la responsabilité de deux utilisateurs différents. A titre d'exemple, un dispositif domotique correspondant à un système de chauffage peut être compris dans une première installation domotique comprenant un ensemble des dispositifs compris dans un logement, sous le contrôle d'un utilisateur occupant le logement, et dans une seconde installation domotique comprenant un ensemble de dispositifs domotiques correspondant à des systèmes de chauffage disposés dans une pluralité de logement sous le contrôle d'un utilisateur administrateur des équipements de chauffage pour la pluralité de logements.

Par unité centrale de commande de l'installation domotique, on entend une unité électronique comprenant au moins une unité de traitement pour contenir et exécuter au moins un programme d'ordinateur, comprenant au moins un module de communication destinée au contrôle et/ou à la commande d'au moins un dispositif domotique et au moins un module de communication avec l'unité de gestion. L'unité électronique peut être indépendante ou intégrée dans un dispositif domotique. Dans ce dernier cas, le module de communication destiné au contrôle et/ou à la commande du dispositif peut être un module de communication interne au dispositif domotique et/ou un module de communication destiné au contrôle et/ou à la commande d'autres dispositifs domotiques. Dans certaines applications, une unité centrale de commande peut communiquer avec l'unité de gestion à travers une unité de gestion intermédiaire, par exemple d'un fournisseur de service tiers, dont l'unité de gestion intermédiaire offre une interface de service ou API.

Dans le cas d'une connexion local d'un terminal utilisateur, on peut entendre par connexion à l'installation domotique une connexion individuelle à chacune des unités centrales de commande de l'installation, selon un protocole de communication local.

Selon un aspect de l'invention, l'unité de gestion est un serveur connecté à distance à l'au moins une installation domotique, par l'intermédiaire d'un réseau étendu.

Selon un autre aspect de l'invention, l'unité de gestion est une unité centrale destinée à être reliée à une ou plusieurs unités centrales de commande sur des réseaux privés ou locaux distincts, ou encore sur le même réseau local.

Selon un aspect de l'invention, la première et la seconde information de signalement peuvent consister en un simple signalement de l'existence d'un sous-scénario, le contenu du sous-scénario pouvant être transmis à l'unité de gestion ou le terminal lors des échanges ultérieurs. Alternativement, le contenu du sous-scénario peut être compris dans le message signalant l'existence de ce sous-scénario.

Selon un aspect de l'invention, le scénario est défini pour un groupe de dispositifs commandés correspondant à un sous-ensemble d'un groupe de dispositif rattaché à une entité représentative de l'installation domotique.

Selon un aspect de l'invention, l'installation domotique est représentée par une entité représentative associée à un groupe de dispositif domotiques correspondant à la pluralité de dispositifs domotiques appartenant à l'installation.

Selon un aspect de l'invention, le procédé est exécuté par une unité de gestion et comprenant en outre une étape d'enregistrement dans l'entité représentative du scénario reconstitué à l'étape iii, en lien avec l'identifiant de scenario.

La présente invention concerne également un produit programme d'ordinateur comprenant des instructions de code agencées pour mettre en oeuvre les étapes d'un procédé décrit précédemment, lorsque ledit programme est exécuté par un processeur d'une unité de gestion ou d'un terminal utilisateur.

La présente invention concerne également un système comprenant une unité de gestion ou un terminal utilisateur agencée pour exécuter le procédé décrit précédemment, de façon connectée à au moins une unité centrale de commande d'une installation domotique.

Les différents aspects définis ci-dessus non incompatibles peuvent être combinés.

L'invention sera mieux comprise à l'aide de la description détaillée qui est exposée ci-dessous en regard du dessin annexé dans lequel :
La figure 1 est une vue schématique d'un bâtiment et d'une installation domotique conforme à un mode de réalisation de l'invention ;
La figure 2 est un schéma présentant une architecture d'un système comprenant l'installation domotique illustrée à la figure 1 ainsi qu'un serveur destiné à être connecté à un terminal utilisateur ;
La figure 3 est un schéma représentant les relations entre une entité représentative d'une installation domotique, les unités centrales de commande et les dispositifs de l'installation domotique.
La figure 4 est un schéma illustrant un mode de mise en oeuvre d'un procédé d'enregistrement d'une unité centrale de commande d'une installation domotique auprès d'une unité de gestion selon l'invention.
La figure 5 est un schéma illustrant un mode de mise en oeuvre d'un procédé de configuration d'une installation domotique selon l'invention.
La figure 6 est un schéma illustrant un mode de mise en oeuvre d'un procédé de découverte de la configuration d'une installation domotique selon l'invention.
La figure 7 est un schéma illustrant un mode de mise en oeuvre d'un procédé de commande d'une installation domotique selon l'invention.

Dans la description détaillée qui va suivre des figures définies ci-dessus, les mêmes éléments ou les éléments remplissant des fonctions identiques pourront conserver les mêmes références de manière à simplifier la compréhension de l'invention.

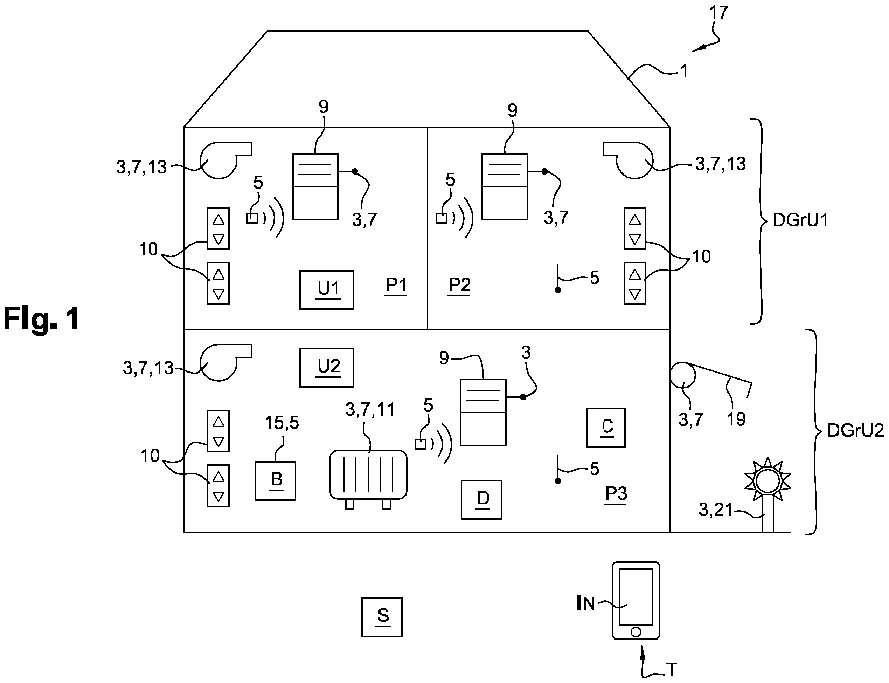

Comme illustré à la figure 1, un bâtiment 1 comprend à titre d'exemple trois pièces P1, P2, P3. Le bâtiment 1 comprend également des équipements domotiques 3 et des capteurs 5.

Un équipement domotique 3 peut être un actionneur agencé pour déplacer ou régler un élément du bâtiment 1, par exemple un actionneur 7 pour déplacer un volet roulant 9 ou un store de terrasse 19, ou un système de régulation 10 pour un chauffage 11 ou un système aéraulique 13. Un équipement domotique 3 peut également être un éclairage, par exemple un éclairage extérieur de terrasse 21 ou un système de commande d'éclairage, un système d'alarme, ou encore une caméra vidéo, en particulier une caméra de vidéosurveillance.

L'installation domotique 17 peut également comprendre un point de commande 15 d'un actionneur 7, comme un boîtier de commande B sans fil pour le volet roulant 9.

L'installation domotique 17 peut comprendre un ou plusieurs capteurs 5, de façon intégrée à un actionneur 7, à un point de commande 15 ou encore au boîtier de commande B, ou de façon indépendante à ces éléments. Un capteur 5 peut, notamment, être agencé pour mesurer une grandeur physique, par exemple un capteur de température, un capteur d'ensoleillement ou un capteur d'humidité. Des capteurs 5 de position d'équipements domotiques 3 du bâtiment 1, comme, par exemple, des capteurs de l'état d'ouverture d'un volet roulant 9 ou des capteurs de position d'un ouvrant tel une fenêtre, motorisée ou non, peuvent également être prévus. L'installation domotique peut également comprendre un ou plusieurs capteurs de présence.

Un équipement domotique 3 et un capteur 5 sont ainsi à considérer comme des unités ayant à disposition des informations sur des états réels constatés d'éléments du bâtiment 1 et étant aptes à partager ces informations avec d'autres éléments de l'installation domotique 17.

Les équipements domotiques 3 et les capteurs 5 peuvent ainsi avoir accès à toute grandeur physique mesurable, comme la température de chaque pièce P1, P2, P3 ou un état d'un élément du bâtiment 1, comme l'état d'ouverture d'un volet roulant 9, le statut d'une alarme, etc.

Par la suite nous utiliserons la désignation de dispositif domotique ou dis positif D indifféremment pour désigner des capteurs ou des équipements domotiques, ou encore des parties d'équipements domotiques 3 ou de capteurs 5.

L'installation domotique 17 comprend une pluralité d'unités centrales de commande U1, U2. En particulier et à titre d'exemple, deux unités centrales de commande U1, U2 sont représentées sur la figure 1.

Chaque unité centrale de commande U1, U2 est agencée pour commander et/ou contrôler une partie des dispositifs D de l'installation 17 formant un groupe DGrU1, DGrU2. A titre d'exemple, sur la figure 1, l'unité centrale de commande U1 est en charge des dispositifs D disposés dans les pièces P1 et P2 du premier étage du bâtiment, alors que l'unité centrale de commande U2 est en charge des dispositifs D disposés dans la pièce P3 au rez-de-chaussée du bâtiment et des dispositifs extérieurs.

En particulier, la commande et/ou le contrôle est réalisé à distance, notamment en utilisant un protocole de communication sans fil, par exemple un protocole de communication radio. Chaque unité centrale de commande U1, U2 est agencée pour regrouper l'ensemble des données en provenance des dispositifs D de son groupe DGrU1, DGrU2 et pour traiter ces données.

Les dispositifs D faisant partie d'un groupe DGrU1, DGrU2 appartiennent à un réseau local géré par une unité centrale de commande U1 ou U2 au sein de l'installation domotique et communiquent selon un protocole de communication local avec l'unité centrale de commande U1 ou U2. Ils ont une adresse locale dans ce réseau. Les dispositifs logiques D peuvent être modélisés comme des noeuds ou points d'extrémité dans le réseau local.

Le système d'adressage local peut être hiérarchique ou à plat, le format d'adresse pouvant être numérique ou alphanumérique.

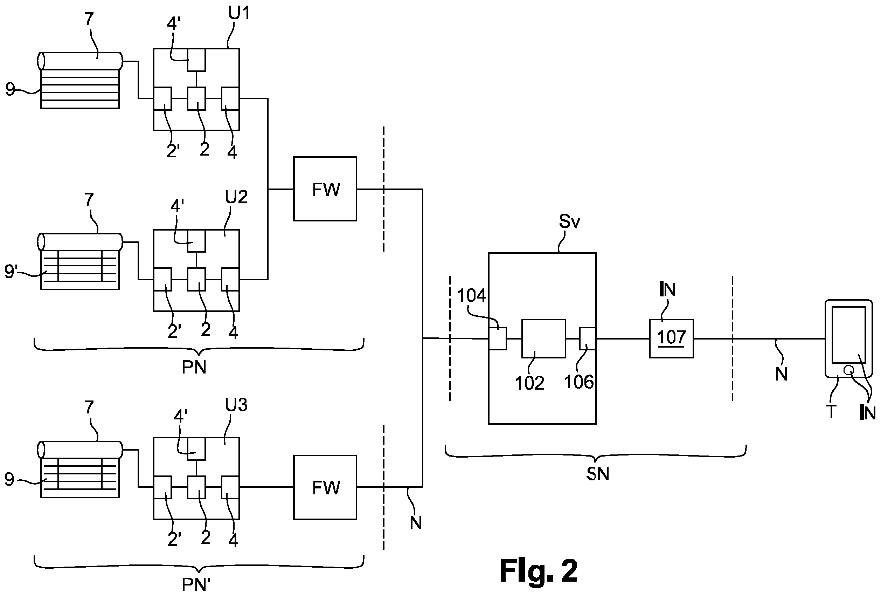

Comme cela est représenté sur la figure 2, chaque unité centrale de commande U est agencée pour communiquer avec un serveur Sv.

Les unités centrales de commande U1, U2, U3 sont disposées sur un réseau privé PN, PN', dont l'accès est en général protégé par un pare-feu FW. En particulier, dans l'exemple représenté sur la figure 2, deux unités centrales de commandes Ul, U2 sont disposées sur un premier réseau privé correspondant à une première installation domotique, alors qu'une troisième unité centrale de commande U3 est disposée sur un second réseau privé PN', indépendant du réseau privé PN correspondant à une seconde installation domotique. Le serveur Sv est également disposé sur un réseau privé SN. Le réseau privé PN est relié à un réseau étendu N, par exemple Internet. Bien entendu, le serveur Sv est agencé pour communiquer avec un ensemble de telles unités centrales de commande U. Nous décrirons par la suite une de ces unités.

Une unité centrale de commande U comprend une unité de traitement 2 agencée pour contenir et exécuter un premier programme d'ordinateur. A titre d'exemple, l'unité de traitement 2 comprend un processeur, une mémoire flash de stockage ainsi d'un mémoire vive, et d'une puce Ethernet.

L'unité centrale de commande U comprend, en outre, au moins un module de communication 2' destinée au contrôle et/ou à la commande d'équipements domotiques 3 et/ou de capteurs 5, les équipements domotiques 3 pouvant être des actionneurs 7, des éclairages 21, un système d'alarme, ou une caméra vidéo.

A titre d'exemple, comme cela est représenté sur la figure 2, le module de communication 2' permet le contrôle et la commande d'au moins un actionneur 7, d'un élément mobile du bâtiment 1, comme par exemple un volet roulant 9, ou d'un brise soleil orientable 9' ou d'autres actionneurs 7 ou d'éclairages 21, comme cela est précédemment décrit en référence à la figure 1.

A titre d'exemple, le module de communication 2' peut être agencé pour mettre en oeuvre par exemple un ou plusieurs des protocoles Z-Wave, EnOcean, IO Homecontrol, Somfy RTS, KNX, MODBUS, Wavenis, Philips HUE.

Selon une autre possibilité, par exemple dans le cadre de systèmes d'alarme, l'unité centrale de commande peut être intégrée dans le dispositif domotique.

La réception d'informations d'un capteur 5 fournissant des informations de présence d'un utilisateur ou des valeurs des paramètres environnants, comme la température, l'humidité et la luminosité, est également prévue. De la même façon, l'unité centrale U peut permettre le contrôle et/ou la commande d'un système d'alarme.

Chaque unité centrale de commande U comprend, en outre, un module de communication 4 avec le serveur Sv. Le serveur Sv permet la commande et/ou le contrôle à distance et comprend une ou plusieurs unités de traitement 102 agencée pour contenir et exécuter un deuxième programme d'ordinateur.

Chaque unité centrale de commande U comprend, en outre, un module de communication 4' pour communiquer selon un protocole de communication local, par exemple Bluetooth ou Wifi, avec un terminal de communication mobile T. Le terminal de communication T peut contenir et exécuter un logiciel d'application APP.

Dans certaines applications, une unité centrale de commande U peut communiquer avec l'unité de gestion à travers un serveur intermédiaire, par exemple d'un fournisseur de service tiers, dont le serveur intermédiaire offre une interface de service ou API. Le serveur Sv comprend, de son côté, au moins une interface de communication 104 destinée à la communication avec l'unité centrale U.

Le serveur Sv peut comprendre également une interface de communication 106 destinée à la communication avec une interface de commande et/ou de contrôle IN permettant à un utilisateur de contrôler à distance l'installation domotique.

Il est à noter que le terme serveur est une désignation logique qui peut recouvrir l'utilisation de plusieurs serveurs physiques pour répartir la charge de traitement informatique à réaliser.

L'interface de commande et/ou de contrôle IN comprend, par exemple, un serveur web 107 et un terminal de communication mobile T communiquant par le réseau étendu N. Le terminal de communication mobile T peut être, par exemple, un téléphone intelligent ou une tablette. Le terminal de communication mobile T peut être le même ou un terminal du même type que celui avec lequel l'unité centrale de commande U communique en local au moyen du module de communication 4', ou un terminal différent. Nous désignerons indifféremment ces terminaux mobiles par la référence T.

L'interface de commande et/ou de contrôle IN comprend un processeur qui peut être disposé au niveau du serveur web 107 et/ou du terminal de communication mobile T.

Le processeur de l'interface de commande et/ou de contrôle IN est agencé pour utiliser un troisième programme d'ordinateur. Ce troisième programme d'ordinateur est quant à lui agencé pour exécuter une application téléchargeable.

Le terminal de communication mobile T comprend un dispositif d'entrée de données et un dispositif d'affichage, par exemple sous forme d'une partie de commande tactile d'un écran du terminal T et sous forme d'un ou de plusieurs boutons du terminal T.

Les figures 1 et 2 décrivent une installation 17 qui comprend un ensemble de dispositifs D et une pluralité d'unités centrales de commande U1, U2, disposées dans un même logement, un même bâtiment ou un même lieu physique.

Selon une autre possibilité, une installation 17 au sens de l'invention peut comprendre des dispositifs domotiques disposés sur une pluralité de lieux, avec au moins une unité centrale de commande sur chacun de ces lieux à laquelle sont rattachés les dispositifs domotiques, les unités centrales de commande U de l'installation étant placées sous le contrôle d'un utilisateur.

A titre d'exemple, une telle installation peut comprendre un ensemble de dispositifs domotiques constitués par des systèmes de chauffage répartis dans un ensemble de logements ou de locaux tertiaires, rattaché à un ensemble d'unité centrales de commande U, l'ensemble de dispositifs domotiques étant destiné à être commandé par un utilisateur spécifiques en charge du chauffage pour ledit ensemble de logements ou de locaux tertiaires.

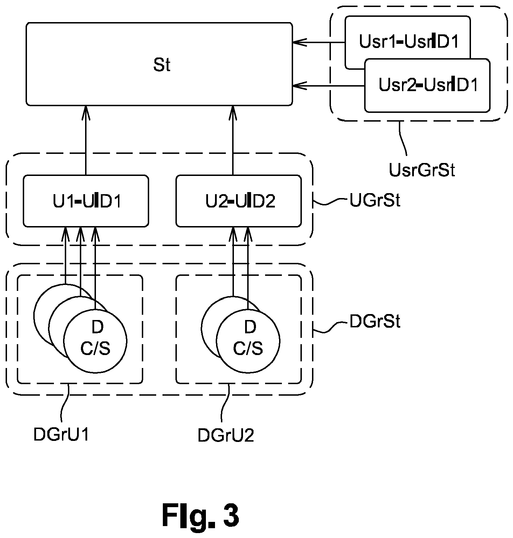

Nous allons à présent décrire, en référence à la figure 3, la représentation de l'installation 17 par une entité représentative St sur le serveur Sv, dans le cas où l'installation comprend de multiples unités centrales de commandes U.

Le système selon l'invention rattache plusieurs unités centrales de commande U à un seul objet St représentant une installation 17 par une configuration au niveau du serveur Sv.

Le serveur Sv peut ainsi présenter à l'utilisateur l'installation 17 comme un seul ensemble de dispositifs D à l'utilisateur, par exemple par l'intermédiaire d'une Interface de Programmation d'Application ou API, dans lequel chaque dispositif D peut accepter un ensemble donné de commandes C ou présenter des variables d'état S.

Le serveur Sv peut également utiliser un système ou couche d'abstraction pour les commandes C et les variables d'état S pour proposer une API plus générique et indépendante du protocole de communication utilisée par un dispositif D donné.

L'identification de l'entité représentative St de l'installation peut être selon un mode de réalisation réalisée par l'un quelconque des identifiants UID de l'une des unités centrales de commande U présente dans l'installation, par un identifiant de l'installation ou de l'utilisateur.

Ainsi, pour simplifier la désignation d'une installation dans les APIs publiques, il suffit que les utilisateurs de ces APIs fournissent un identifiant unique attachée à l'entité représentative St de l'installation 17.

De façon interne au serveur, un identifiant unique de l'entité représentative St de l'installation 17 peut exister pour faciliter l'implémentation.

Ainsi, l'entité représentative St peut être associée à une liste ou groupe de dispositifs DGrSt regroupant les dispositifs contenus dans les différents groupes DGrU1, DGrU2 attachés à chaque unité centrale de commande U1, U2, et à un groupe UGrSt des identifiants UID des unités centrales de commandes concernées U. Les dispositifs sont identifiés par un identifiant unique Une entité représentative d'une installation domotique peut être associée avec un utilisateur donné Usr1, identifié par un identifiant UsrID, correspondant par exemple à une combinaison login et mot de passe ou avec un groupe d'utilisateur donné UsrGrSt.

Un exemple de mode de réalisation d'un identifiant unique d'un dispositif DURL va être à présent décrite.

Selon ce mode de réalisation, l'identifiant unique d'un dispositif DURL comprend des informations sur :
- Le protocole natif local du dispositif domotique D ;
- Le chemin de communication vers le dispositif D, incluant les unités centrales de commande intermédiaires U et les adresses de terminaison à traverser, organisées ou non dans une topologie hiérarchique ;
- Un identifiant de sous-système subsystemId si le dispositif comprend plusieurs sous-ensemble fonctionnels ou sous-systèmes qui peuvent être adressés séparément. Les dispositifs qui ne comprennent qu'un ensemble fonctionnel ne présentent pas d'extension d'identification d'un sous-système.

Ainsi, la forme de l'identifiant unique d'un dispositif DURL peut être la suivante :

```
            <protocol>://<gatewayId>/<rawDeviceAddress>(#<subsystemId>)
```

Dans laquelle les champs suivants sont présents :
protocol : identifiant du protocole local de dispositif natif;
gatewayId : identifiant de la première unité centrale de commande U, par exemple un numéro de série ou un identifiant unique.
rawDeviceAddress : un chemin simple ou à plusieurs niveaux. Sa signification et son format dépendent du schéma d'adressage du protocole de communication local du dispositif D.
subsystemId : ce champ optionnel indique une identification, par exemple un rang du sous-système (démarrant par exemple à 1), si un tel sous-système est présent.

### Exemples:

### 1. knx://0201-0001-1234/1.1.3

Cet identifiant unique de dispositif DURL correspond à un dispositif D communiquant par le protocole KNX avec une adresse individuelle 1.1.3 accessible par l'unité centrale de commande U portant l'identifiant #0201-0001-1234.

### 2. io://0201-0001-1234/145036#2

Cet identifiant unique d'un dispositif DURL correspond à un sous-système portant le n°2 associé à un dispositif D communiquant par le protocole io homecontrol avec une adresse radio 145036 accessible par l'unité centrale de commande U portant l'identifiant #0201-0001-1234.

Les manipulations des données relatives aux dispositifs D au niveau du serveur Sv sont réalisées par un processus ou service d'exécution ES. Afin de stocker les données relatives aux différentes instances de dispositif D mentionnées ci-dessus, le service d'exécution peut avoir accès à une base de données d'instances IDB. Bien entendu, ces différents types d'instances peuvent être stockés également de façon séparée. Par ailleurs, par base de données, on entend ici un mode de stockage approprié pour un ensemble d'instances, qui peuvent être mémorisées dans une liste, un arbre ou des tables ou tout autre structure de données appropriée.

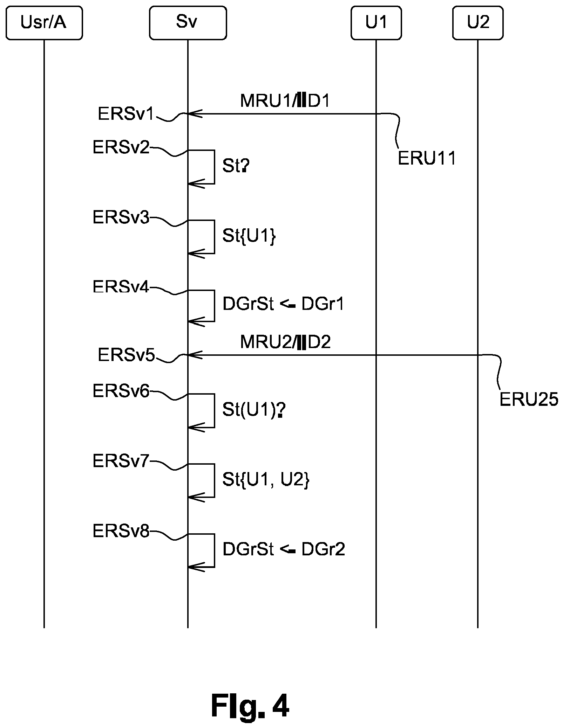

Nous allons à présent décrire un procédé d'enregistrement des unités centrales de commande U, en référence à la figure 4, auprès d'un serveur Sv connecté à l'au moins une installation domotique 17.

Dans une première étape ERSv1, le serveur Sv reçoit au moins un message MRU1 de demande d'enregistrement d'au moins une première unité centrale de commande U1 pour l'installation 17, émise dans une étape ERU1 par une première unité centrale de commande Ul, et/ou par un terminal utilisateur T, sur la base d'une information d'identification IID1.

L'information d'identification peut correspondre par exemple à un identifiant d'une unité centrale de commande appartenant déjà à une entité représentative, et/ou à un identifiant de l'utilisateur UsrID sous la responsabilité duquel l'enregistrement est effectué et/ou directement à un identifiant d'une entité représentative d'une installation. L'information d'identification peut être contenue dans le message ou être déduite du contexte, par exemple d'une adresse réseau d'émission du message, ou encore de caractéristiques relatives à la session de communication.

Dans une seconde étape ERSv2, le serveur obtient une information de rattachement Stl1 de la première unité centrale de commande U1 à une entité représentative St d'une installation domotique 17. Si l'information de rattachement correspond à une absence de rattachement de l'unité centrale de commande U1 à une installation 17 précédemment enregistrée, le serveur procède dans une troisième étape ERSv3 à la création d'une entité représentative de l'installation 17 et rattache la première unité centrale de commande U1 à cette entité représentative St. Cela est notamment le cas lors de l'enregistrement d'une première unité centrale de commande U1 d'une installation donnée.

Dans le cas où une unité centrale de commande U est déjà appairée avec un ou plusieurs dispositifs D d'un groupe DGrU1, l'entité représentative St est mise à jour dans une quatrième étape ERSv4 pour représenter ces dispositifs dans le groupe de dispositifs DGrSt attaché à l'entité représentative de l'installation 17. Ainsi, le groupe de dispositifs DGrSt est mis à jour. Les informations nécessaires à la mise à jour de l'entité représentative St peuvent être présentes dans le message MRU2, ou faire l'objet d'échanges supplémentaires entre le serveur Sv afin d'obtenir des éléments d'identification des dispositifs D concernés.

Dans une cinquième étape ERSv5, le serveur Sv reçoit au moins un message MRU2 de demande d'enregistrement d'une deuxième unité centrale de commande U2 pour l'installation 17, émis dans une étape ERU1 par une deuxième unité centrale de commande U2, et/ou par un terminal utilisateur T, sur la base d'une information d'identification IID2.

Comme nous l'avons vu précédemment, l'information d'identification peut correspondre par exemple à un identifiant d'une unité centrale de commande appartenant déjà à une entité représentative, et/ou à un identifiant de l'utilisateur UsrID sous la responsabilité duquel l'enregistrement est effectué, et/ou à un identifiant de l'installation 17.

Dans une sixième étape ERSv6, le serveur Sv procède à l'obtention d'information de rattachement Stl2 de la deuxième unité centrale de commande U2 à une entité représentative St d'une installation domotique 17.

Dans une septième étape ERSv7, le serveur Sv procède à un rattachement de la seconde unité centrale à une entité représentative St de l'installation 17 à laquelle est également rattachée la première unité centrale de commande U1 pour le même utilisateur UID1.

Dans le cas où l'unité centrale de commande U2 est déjà appairée avec un ou plusieurs dispositifs D d'un groupe DGrU2, l'entité représentative St est mise à jour dans une huitième étape ERSv8 pour représenter ces dispositifs dans le groupe de dispositifs DGrSt attaché à l'entité représentative de l'installation 17. Ainsi, le groupe de dispositifs DGrSt est mis à jour. Les informations nécessaires à la mise à jour de l'entité représentative peuvent être présentes dans le message MRU2, ou faire l'objet d'échanges supplémentaires entre le serveur Sv afin d'obtenir des éléments d'identification des dispositifs D concernés.

Ainsi, les unités centrales de commande U1 et U2 sont considérées comme rattachées à la même entité représentative St d'une installation, qui rassemble l'ensemble des dispositifs D de l'installation rattachés indifféremment à la première ou à la seconde unité centrale de commande dans un même groupe DGrSt qui peut être communiqué à un terminal utilisateur T. Ces dispositions sont obtenues sans communication entre les unités centrales de commande, mais simplement par le rattachement logique opéré lors de l'enregistrement.

L'interface présentée à l'utilisateur peut ainsi ajouter une couche d'abstraction pour cacher le rattachement effectif des dispositifs aux unités centrales de commande U. L'interface représente ainsi les équipements domotiques, comme les volets, stores, HVAC ou éclairage, pilotables dans l'installation ainsi que les capteurs présents.

Si les dispositifs D sont ainsi rattachés à une entité représentative de l'installation, les informations de rattachement des dispositifs domotiques D aux unités centrales de commande U sont toutefois transmises au serveur Sv, pour intégration dans la structure de données, en vue du routage des messages vers l'unité centrale de commande concernée dans le cas de commande par le Serveur Sv. En particulier, l'identifiant de l'unité centrale de commande à laquelle se rattache un produit peut être contenue dans l'identifiant DURL.

Une unité centrale de commande U peut être détachée de l'entité représentative St d'une installation. Lorsqu'une unité centrale de commande U est détachée, tous les dispositifs qui sont gérés par l'intermédiaire de l'unité centrale de commande sont supprimés du groupe DGrSt de dispositifs de l'entité représentative St de l'installation 17. Ainsi, il est possible de prévoir qu'une unité centrale ne peut pas être détachée si l'entité représentative St comprend des dépendances sur les dispositifs D gérés par cette unité centrale de commande U, comme des scénarios. Ces dépendances doivent être supprimées avant que l'unité centrale de commande U puisse être détachée.

Dans le cas de l'appairage d'un nouveau dispositif D à une unité centrale de commande U, ou au contraire de la suppression d'un dispositif, ou encore de sa modification, un message de mise à jour est envoyé au Serveur Sv afin de mettre également à jour la liste de dispositif DGrSt dépendant de l'entité représentative St.

Grâce à ce procédé d'enregistrement, le serveur Sv peut donc proposer sur l'interface IN une description de l'installation 17, grâce à l'utilisation de l'entité représentative sous forme d'un groupe de dispositifs D, contenu dans le groupe de dispositifs DGrSt, qui présentent des variables d'état S mais également des commandes disponibles C.

Il est ainsi possible de commander et de contrôler par l'interface l'ensemble des dispositifs de l'installation indépendamment de leur rattachement aux unités centrales U.

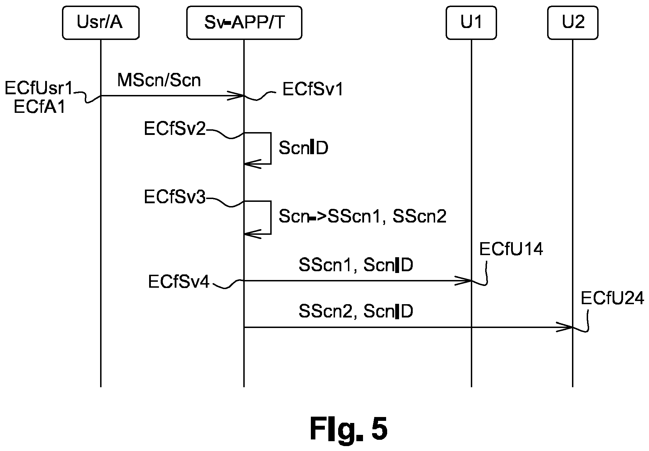

Nous allons à présent décrire un procédé de configuration d'au moins une installation domotique 17 d'un bâtiment 1 en référence à la figure 5. Nous supposerons que le procédé de configuration est réalisé postérieurement au procédé d'enregistrement précédemment décrit. Ainsi, les unités centrales de commandes U1 et U2 sont rattachées à l'entité représentative St, et les dispositifs D sont identifiés dans le groupe de dispositif DGrSt rattaché à l'installation.

Il est possible dans une première étape ECfUsr1 à l'utilisateur Usr ou à une application tierce dans une étape ECfA1 de définir ainsi des scénarios Scn mettant en oeuvre plusieurs dispositifs D de la même installation domotique 17 mais rattachés à des unités centrales de commande distinctes U1 ou U2. La définition du scénario Scn est reçue et enregistrée par le serveur Sv dans une étape ECfSvl.

Nous considérerons ici un scénario Scn comprenant un ensemble de commandes C destiné à une pluralité de dispositifs domotiques D, ladite pluralité comprenant au moins un premier dispositif domotique D1 appairé à une première unité centrale de commande U1 et un deuxième dispositif D2 appairé à une deuxième unité centrale de commande U2.

Dans une seconde étape ECfSv2, le serveur Sv procède à l'affectation d'un identifiant de scenario ScnID au scénario défini à l'étape précédente.

Dans une troisième étape ECfSv3, le serveur Sv procède à une partition du scénario Scn en au moins deux sous-scénario SScn1 et SScn2 correspondant à des parties de scénario à effectuer par chacune des unités de commande U1 et U2 en lien avec les dispositifs D appartenant au groupe de dispositifs DGrU1 ou DGrU2 rattaché à l'unité centrale correspondante U1 ou U2.

Dans une quatrième étape ECfSv4, le serveur procède à l'envoi des sous-scénarios et de l'identifiant de scénario ScnID aux unités centrales de commande correspondantes U1, U2, les sous-scénarios SScn1, SScn2 correspondants étant enregistrés dans les unités centrales de commande en lien avec le même identifiant de scenario ScnID.

Grâce à ces dispositions, le scénario est enregistré sur les unités centrales de commande par parties SScn1, SScn2 avec une référence audit identifiant de scénario ScnID. Il est ensuite possible pour un utilisateur de commander l'exécution de ce scénario soit localement par un accès direct sur les unités centrales de commande, soit à distance par le serveur Sv, comme cela sera détaillé ci-après. Dans les deux cas, le déclenchement de l'exécution de ce scénario Scn peut être obtenu de manière uniforme pour toutes les unités de commande U1, U2, en faisant simplement référence à l'identifiant (unique) ScnID.

Selon une variante du procédé, l'ensemble des étapes peut être réalisé par une application APP sur un terminal mobile T au lieu du serveur Sv. Dans ce cas, l'étape de définition peut être réalisée par une interface graphique de l'application.

Une fois que les différents sous-scénarios sont enregistrés dans les unités centrales de commande U, il est possible ultérieurement que cette configuration soit découverte par l'intermédiaire du serveur Sv ou d'une application exécutée sur un terminal utilisateur T connecté à l'installation.

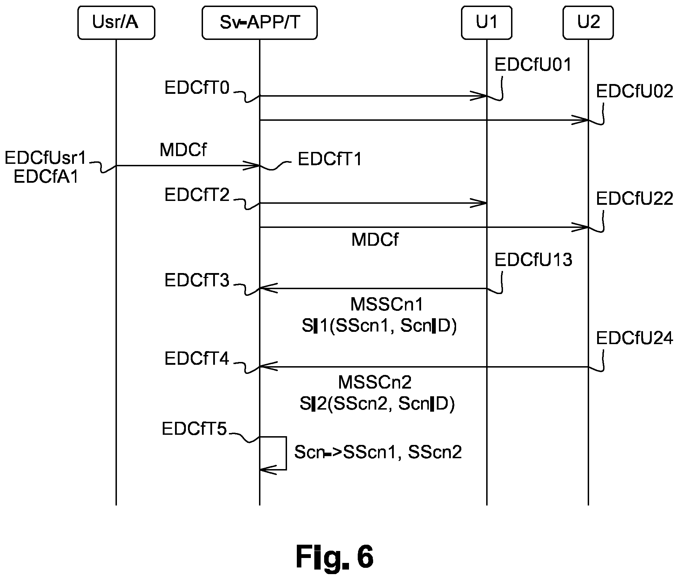

Le procédé de découverte de la configuration va à présent être décrit en référence à la figure 6. Nous supposerons ici que le procédé est effectué par un terminal utilisateur mobile, par exemple exécutant une application APP.

Ce terminal est connecté dans une étape préalable EDCfT0 de façon locale individuellement aux unités centrales de commande U de l'installation 17, en utilisant un protocole local, comme par exemple un protocole de type Bluetooth, Zigbee ou encore en Wifi. Nous désignerons par la suite par terminal indifféremment le terminal ou l'application APP exécutée sur ce terminal T.

Dans une étape EDCfT1, un message MDCf ou une instruction de découverte de configuration est reçu en provenance par exemple d'un utilisateur ou d'une application tierce. Alternativement, l'instruction peut correspondre à une recherche périodique de la configuration. Les étapes EDCfT0 et EDCfT1 peuvent être interverties, la connexion pouvant être établie après réception des instructions de découverte.

Dans une étape EDCfT2, le terminal peut envoyer un message de découverte à la pluralité d'unités centrales U avec lesquelles il est en mesure de communiquer, afin de solliciter des messages en retour. Nous supposerons dans le cas présent que deux unités centrales de commandes U1 et U2 sont présentes dans l'installation et accessible au terminal T.

Ensuite, dans une première étape de réception EDCfT3, le terminal reçoit un premier message MSScnl en provenance d'une première unité de commande U1. Le premier message comprend une première information de signalement SI1 concernant au moins un premier sous-scénario SScn1 préenregistré dans ladite première unité centrale de commande en lien avec un identifiant de scenario ScnID, tel que configuré dans le procédé de configuration décrit ci-dessus.

Dans une deuxième étape de réception EDCfT4, le terminal reçoit un deuxième message MSScn2 en provenance d'une première unité de commande U2. Le deuxième message comprend une deuxième information de signalement SI1 concernant au moins un deuxième sous-scénario SScn2 préenregistré dans ladite deuxième unité centrale de commande en lien avec le même identifiant de scenario ScnID, tel que configuré dans le procédé de configuration décrit ci-dessus.

Pour définir la correspondance entre les sous-scénarios et scénarios identifié, le terminal peut maintenir une liste d'identifiants reçus lors du procédé de découverte.

Ensuite, lors d'une étape de reconstitution EDCfT5, le terminal T reconstitue le scénario Scn associé à l'identifiant de scénario ScnID comprenant au moins l'au moins une première commande C1 et l'au moins une deuxième commande C2, par combinaison du premier sous-scénario SScn1 et du deuxième sous-scénario SScn2 ;

Il est à noter qu'il peut exister un échange supplémentaire entre le terminal T et les unités centrales de commande pour que les unités centrales de commandes communiquent la description des dispositifs D qui sont rattachés à chaque unité centrale de commande, avant de communiquer les informations de signalement SI correspondant aux scénarios enregistrés.

Selon une variante, la connexion du terminal aux unités centrales de commandes peut être réalisée par internet.

En considérant l'exemple de l'installation décrite en référence à la figure 1, nous pouvons considérer comme précédemment que la première unité centrale de commande l'unité centrale de commande U1 est en charge des dispositifs D disposés dans les pièces P1 et P2 du premier étage du bâtiment, alors que l'unité centrale de commande U2 est en charge des dispositifs D disposés dans la pièce P3 au rez-de-chaussée du bâtiment et des dispositifs extérieurs.

L'utilisateur a pu définir des scénarios pour les dispositifs du premier étage et des scénarios pour les dispositifs du rez-de-chaussée.

Suite à l'exécution du procédé de découverte, le terminal va pouvoir identifier que 2 box sont présentes dans le système, verra également les actionneurs associés, et les scenarios existants.

A partir de son terminal, un utilisateur X va pouvoir également créer un nouveau scenario mettant en scène n'importe lesquels des actionneurs du système. Il peut créer, par exemple, un scenario Scn « fermer toute la maison » mettant en jeu la totalité des actionneurs d'ouvrants de l'installation ; l'identifiant ScnID de ce nouveau scenario est alors transmis à chacune des unités centrales de commande U1 et U2. Les unités centrales de commande U1 et U2 ne connaissent pas la définition complète du scenario Scn ; elles ne le connaissent que pour les actionneurs qui leur sont rattachés.

Lorsqu'un autre habitant Y des lieux va lancer sa propre application sur son propre terminal T, il va pouvoir découvrir l'ensemble des configurations stockées dans chaque unité centrale de commande U ; il verra l'ensemble des scenarios dont le scénario réparti Scn défini par l'autre utilisateur.

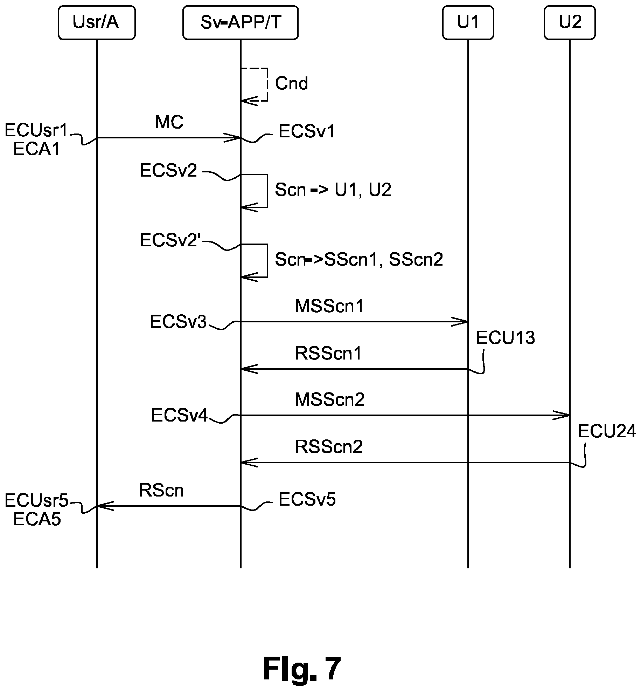

Un procédé de commande va à présent être décrit en référence à la figure 7, dans un cas où la commande est générée à distance par l'intermédiaire de l'interface utilisateur IN et du serveur Sv et dans le cas d'une commande de scénario Scn.

Dans une première étape ECSv1, le serveur Sv reçoit un message de commande MC en provenance d'un utilisateur Usr ou d'une application A relative à une demande d'exécution d'un scénario.

Nous supposerons que le message de commande MC contient une demande d'exécution du scénario Scn, identifié par l'identifiant de scénario ScnID, configuré lors de l'exemple de procédé de configuration décrit précédemment, qui correspond à la réalisation d'un sous-scénario SScn1 sur l'unité centrale de commande U1 et à la réalisation d'un sous-scénario SScn2 sur l'unité centrale de commande U2.

Dans un tel cas, il est possible que la correspondance entre l'exécution des sous-scénarios Scn1 et Scn2 et du scénario Scn soit gardée en mémoire pour une gestion d'erreur appropriée. En particulier le service d'exécution ES peut mettre en oeuvre un automate à états à cette fin.

Ainsi, dans une étape ECSv2, le serveur procède à l'établissement d'une liste d'unités centrales de commande U parmi la pluralité d'unités centrales de commandes concernées par le scénario Scn comprenant au moins ladite première unité centrale de commande U1 et ladite deuxième unité centrale de commande U2.

Par ailleurs, le serveur Sv établit dans une étape ECSv2' la correspondance entre le résultat d'exécution du Scénario Scn et les résultats respectifs d'exécution des deux Sous-scénarios SScn1 et SScn2, cette correspondance pouvant être stockée en mémoire ou dans la base de données

Dans une troisième étape ECSv3 un premier message de commande MSScn1 est envoyée à destination de l'unité centrale U1 de l'installation domotique 17 en vue de l'exécution du sous-scénario SScn1. Comme expliqué précédemment, les sous-scénarios SScn1, SScn2 peuvent être enregistrés dans les unités centrales U1, U2, en lien avec le même identifiant de scenario ScnID. Le message MSScnl contient dans ce cas une simple référence à l'identifiant ScnID.

Dans l'exemple représenté, nous supposons que le retour de cette première commande correspond à un succès de la réalisation du sous-scénario avec un code de retour RSSc1, envoyé par l'unité centrale de commande U1 dans une étape ECU13. Le service d'exécution peut stocker cette valeur de succès.

Dans une étape ECSv4, un deuxième message de commande MSSCn2 est envoyée à destination de l'unité centrale de commande U2 de l'installation domotique 17 en vue de l'exécution du sous-scénario SScn2. Le message MSScn2 contient dans ce cas une simple référence à l'identifiant ScnID. Dans l'exemple représenté, nous supposons que le retour de l'exécution du deuxième sous-scénario correspond à un échec, avec retour d'un code de retour RSScn2, envoyé par l'unité centrale de commande U2 dans une étape ECU24.

Dans une dernière étape ECSv5, le service d'exécution définit une réponse RScn à retourner à l'utilisateur suite au message de commande MC .

Etant donné qu'un résultat de sous-scénario ou code de retour, a été reçue pour chaque sous-scénario exécuté, les résultats doivent être agrégés pour simuler un résultat global pour le scénario Scn. En particulier, le scénario Scn est considéré comme effectué si tous les sous-scénarios SScn1, SScn2 ont été réalisés avec succès, et échoué si un ou plusieurs sous-scénarios ont échoué.

Dans le cas illustré à la figure 7, il peut être considéré que le scénario Scn a échoué.

Cette réponse est communiquée à l'utilisateur Usr ou à l'application A qui la reçoit dans une étape ECUsr5 ou ECA5.

Selon une variante du procédé, l'ensemble des étapes peut être réalisé par une application APP sur un terminal mobile T au lieu du serveur Sv. Dans ce cas, l'étape de réception peut être réalisée par la communication d'un ordre par l'utilisateur par l'intermédiaire de l'interface graphique de l'application.

Selon une variante du procédé, le procédé de commande peut être déclenché lors de l'étape ECSv1 par la réalisation d'une condition Cnd basée sur le temps et/ou au moins une variable d'état d'un dispositif, l'évaluation de la condition peut être réalisée soit par l'unité de gestion ou le terminal. Cette étape alternative à la réception d'un message est figurée sur la figure 7 en pointillés.

Dans le cas ou l'évaluation de la condition est réalisée par une application tierce qui transmet un message de commande à l'unité de gestion ou au terminal, l'étape de réception est présente comme décrite précédemment. En particulier, le message de commande peut provenir d'une application de gestion de temps réel s'exécutant sur l'unité de gestion, si la condition concerne le temps; ou d'un dispositif domotique par l'intermédiaire de l'unité centrale de commande à laquelle est rattaché le dispositif, si la condition concerne une variable d'état d'un dispositif domotique.

## Revendications

1. Procédé de découverte de la configuration d'une installation domotique (17), l'installation domotique (17) comprenant une pluralité de dispositifs domotiques (D) et une pluralité d'unités centrales de commande (U1, U2) ; le procédé étant exécuté par une unité de gestion (Sv) ou par un terminal mobile (T) connecté à l'au moins une installation domotique (17) **caractérisé en ce qu'**il comprend les étapes suivantes :
i. Réception (EDCfT3) d'un premier message (MSScn1) en provenance d'une première unité de commande (U1) parmi la pluralité d'unités centrales de commande (U, U1, U2), le premier message comprenant une première information de signalement concernant au moins un premier sous-scénario (SScn1) préenregistré dans ladite première unité centrale de commande en lien avec un identifiant de scenario (ScnID), le premier sous-scénario (SScn1) comprenant au moins une première commande (C1) destinée à au moins un dispositif (D) rattaché à ladite première unité centrale de commande (U1);
ii. Réception (EDCfT4) d'un deuxième message (MSScn2) en provenance d'une deuxième unité de commande (U2) parmi la pluralité d'unités centrales de commande (U, U1, U2), le deuxième message comprenant une deuxième information de signalement concernant au moins un deuxième sous-scénario (SScn2) préenregistré dans ladite deuxième unité centrale de commande (U2) en lien avec l'identifiant de scenario (ScnID), le deuxième sous-scénario (SScn2) comprenant au moins une deuxième commande (C2) destinée à au moins un dispositif (D) rattaché à ladite deuxième unité centrale de commande (U2);
iii. Reconstitution (EDCfT5) d'un scénario (Scn) associé à l'identifiant de scénario (ScnID) comprenant au moins l'au moins une première commande (C1) et l'au moins une deuxième commande (C2), par combinaison du premier sous-scénario (SScn1) et du deuxième sous-scénario (SScn2) ;

2. Procédé selon la revendication 1, dans lequel le scénario (Scn) est défini pour un groupe de dispositifs commandés correspondant à un sous-ensemble d'un groupe de dispositif (DGrSt) rattaché à une entité représentative (St) de l'installation domotique (17).

3. Procédé selon l'une quelconque des revendications 1 ou 2, dans lequel l'installation domotique (17) est représentée par une entité représentative (St) associée à un groupe (DGrSt) de dispositif domotiques (D) correspondant à la pluralité de dispositifs domotiques (D) appartenant à l'installation (17).

4. Procédé selon la revendication 3, exécuté par une unité de gestion (Sv) et comprenant en outre une étape d'enregistrement dans l'entité représentative (St) du scénario (Scn) reconstitué à l'étape iii, en lien avec l'identifiant de scenario (ScnID).

5. Produit programme d'ordinateur comprenant des instructions de code agencées pour mettre en oeuvre les étapes d'un procédé selon l'une quelconque des revendications 1 à 4, lorsque ledit programme est exécuté par un processeur d'une unité de gestion (Sv) ou d'un terminal utilisateur (T).

## Patentansprüche

1. Verfahren zum Erkennen der Konfiguration einer Gebäudeautomationsanlage (17), wobei die Gebäudeautomationsanlage (17) eine Vielzahl von Gebäudeautomationsvorrichtungen (D) und eine Vielzahl von Zentralsteuereinheiten (U1, U2) umfasst; wobei das Verfahren durch eine Verwaltungseinheit (Sv) oder durch ein mobiles Endgerät (T), das mit der mindestens einen Gebäudeautomationsanlage (17) verbunden ist, ausgeführt wird, **dadurch gekennzeichnet, dass** es die folgenden Schritte umfasst:
i. Empfangen (EDCfT3) einer ersten Nachricht (MSScn1) aus einer ersten Steuereinheit (U1) unter der Vielzahl von Zentralsteuereinheiten (U, U1, U2), wobei die erste Nachricht eine erste Meldungsinformation bezüglich mindestens eines ersten vorab in der ersten Zentralsteuereinheit registrierten Unterszenarios (SScn1) im Zusammenhang mit einer Szenario-Kennung (ScnID) umfasst, wobei das erste Unterszenario (SScn1) mindestens eine erste Steuerung (C1) umfasst, die für mindestens eine Vorrichtung (D) bestimmt ist, die mit der ersten zentralen Steuereinheit (U1) verknüpft ist;
ii. Empfangen (EDCfT4) einer zweiten Nachricht (MSScn2) aus einer zweiten Steuereinheit (U2) unter der Vielzahl von Zentralsteuereinheiten (U, U1, U2), wobei die zweite Nachricht eine zweite Meldungsinformation bezüglich mindestens eines zweiten vorab in der zweiten Zentralsteuereinheit (U2) registrierten Unterszenarios (SScn2) im Zusammenhang mit der Szenario-Kennung (ScnID) umfasst, wobei das zweite Unterszenario (SScn2) mindestens eine zweite Steuerung (C2) umfasst, die für mindestens eine Vorrichtung (D) bestimmt ist, die mit der zweiten Zentralsteuereinheit (U2) verknüpft ist;
iii. Wiederherstellen (EDCfT5) eines Szenarios (Scn), das der Szenario-Kennung (ScnID) zugeordnet ist, umfassend mindestens die mindestens eine erste Steuerung (C1) und die mindestens eine zweite Steuerung (C2), durch Kombinieren des ersten Unterszenarios (SScn1) und des zweiten Unterszenarios (SScn2).

2. Verfahren nach Anspruch 1, wobei das Szenario (Scn) für eine Gruppe von gesteuerten Vorrichtungen definiert ist, die einer Unterbaugruppe einer Vorrichtungsgruppe (DGrSt) entspricht, die mit einer repräsentativen Einheit (St) der Gebäudeautomationsanlage (17) verknüpft ist.

3. Verfahren nach einem der Ansprüche 1 oder 2, wobei die Gebäudeautomationsanlage (17) durch eine repräsentative Einheit (St) repräsentiert wird, die einer Gruppe (DGrSt) von Gebäudeautomationsvorrichtungen (D) zugeordnet ist, die der Vielzahl von Gebäudeautomationsvorrichtungen (D) entspricht, die der Anlage (17) angehört.

4. Verfahren nach Anspruch 3, durch eine Verwaltungseinheit (Sv) ausgeführt, und weiter einen Registrierungsschritt in der repräsentativen Einheit (St) des in dem Schritt iii wiederhergestellten Szenarios (Scn) im Zusammenhang mit der Szenario-Kennung (ScnID) umfassend.

5. Computerprogrammprodukt, Code-Anweisungen umfassend, die angeordnet sind, um die Schritte eines Verfahrens nach einem der Ansprüche 1 bis 4 umzusetzen, wenn das Programm durch einen Prozessor einer Verwaltungseinheit (Sv) oder eines Benutzerendgeräts (T) ausgeführt wird.

## Claims

1. A method for discovering the configuration of a home automation installation (17), the home automation installation (17) comprising a plurality of home automation devices (D) and a plurality of central control units (U1, U2); the method being executed by a management unit (Sv) or by a mobile terminal (T) connected to the at least one home automation installation (17), **characterized in that** it comprises the following steps:
i. Reception (EDCfT3) of a first message (MSScn1) coming from a first control unit (U1) among the plurality of central control units (U, U1, U2), the first message comprising a first signaling information concerning at least one first sub-scenario (SScn1) prerecorded in said first central control unit in connection with a scenario identifier (ScnID), the first sub-scenario (SScn1) comprising at least one first command (C1) intended for at least one device (D) related to said first central control unit (U1);
ii. Reception (EDCfT4) of a second message (MSScn2) coming from a second control unit (U2) among the plurality of central control units (U, U1, U2), the second message comprising a second signaling information concerning at least one second sub-scenario (SScn2) prerecorded in said second central control unit (U2) in connection with the scenario identifier (ScnID), the second sub-scenario (SScn2) comprising at least one second command (C2) intended for at least one device (D) related to said second central control unit (U2);
iii. Reconstitution (EDCfT5) of a scenario (Scn) associated with the scenario identifier (ScnID) comprising at least the at least one first command (C1) and the at least one second command (C2), by combination of the first sub-scenario (SScn1) and the second sub-scenario (SScn2);

2. The discovering method according to claim 1, wherein the scenario (Scn) is defined for a group of controlled devices corresponding to a subset of a device group (DGrSt) related to a representative entity (St) of the home automation installation (17).

3. The discovering method according to any one of claims 1 or 2, wherein the home automation installation (17) is represented by a representative entity (St) associated with a group (DGrSt) of home automation devices (D) corresponding to the plurality of home automation devices (D) belonging to the installation (17).

4. The discovering method according to claim 3, executed by a management unit (Sv) and further comprising a step of recording in the representative entity (St) the scenario (Scn) reconstituted at step iii, in connection with the scenario identifier (ScnID).

5. A computer program product comprising code instructions arranged to implement the steps of the discovering method according to any one of claims 1 to 4, when said program is executed by a processor of a management unit (Sv) or of a user terminal (T).
